# EUROPEAN PATENT APPLICATION

(11) **EP 4 721 697 A1**
(43) Date of publication of application: **08.04.2026**
(21) Application number: 24811361.5
(22) Date of filing: 20.05.2024
(51) Int. Cl.: A61C 8/00, A61C 5/70

(54) **ABUTMENT ASSEMBLY**

(30) Priority: 25.05.2023 KR 20230067848
(71) Applicant: Osstemimplant Co., Ltd., Gangseo-gu Seoul 07789 (KR)
(72) Inventor: KIM, Seong Ro, Seoul 07789 (KR); LEE, Young Seok, Seoul 07789 (KR); YOON, Ji Hoon, Seoul 07789 (KR); HEO, Jae Chan, Seoul 07789 (KR)
(74) Representative: Germain Maureau
(86) International application number: PCT/KR2024/006791
(87) International publication number: WO 2024/242422

(57) **Abstract**

Provided in one embodiment of the present invention is an abutment assembly comprising: a lower connection part, which has a first through-hole extending vertically in the center thereof, has, at the inner side thereof, a first lower recess to be coupled to an abutment so as to prevent the relative rotation thereof, and has, at the outer side thereof, a rotation prevention part to be coupled to a crown so as to prevent the relative rotation thereof; and an upper connection part, which has a third through-hole that extends vertically in the center thereof, and is inserted into a through-hole of the crown so as to be coupled to the lower connection part.

## Description

### [Technical Field]

The present invention relates to an abutment assembly.

### [Background Art]

In general, an abutment assembly is an artificial substitute to reproduce the same shape and function as a natural tooth and includes an implant on which a screw thread is formed on an outer circumferential surface and which imitates a tooth root shape of the natural tooth to be installed in an alveolar bone, an abutment connected to and installed on the implant and having an upper portion to which an artificial tooth is coupled, and a fixing screw fixing the implant and the abutment to each other.

Methods of coupling a prosthesis which is an artificial tooth to an abutment mainly include a screw fastening method, a cement bonding method, and a coupling method in which the screw fastening method and the cement bonding method are mixed and used.

First, a screw fastening method is a method of fastening a prosthesis integrally formed with an abutment to an implant implemented in an alveolar bone, but there is a disadvantage that there is a possibility of deformation due to contraction occurring when the prosthesis is casted.

In addition, a cement bonding method is a method of fastening an abutment to an implant and then bonding a prosthesis to an upper surface of the abutment using dental cement. However, in the cement bonding method, it takes much time to remove the cement exposed at the outside of a crown, and even when the cement is cleanly removed, there are problems that the cement inside the crown may melt and leak into a patient's mouth to cause gingivitis, and in addition, the implant may be separated. In addition, even in a mixed fastening method in which the screw fastening method and the cement fastening method are used, there are problems of loosening a screw and causing gingivitis due to remaining cement.

### [Content of Invention]

### [Technical Problem]

The present invention is to solve the above-described problems of the conventional technology and is directed to providing an abutment assembly with a structure capable of preventing loosening of a crown after the crown is fastened to an abutment even without using dental cement.

### [Technical Solution]

One aspect of the present invention provides an abutment assembly including a lower connection part having a central portion in which a first through hole extending in a vertical direction is formed, an inner side at which a first lower groove coupled to an abutment to prevent relative rotation is formed, and an outer side at which a rotation prevention portion coupled to a crown to prevent relative rotation is formed and an upper connection part having a central portion in which a third through hole extending in the vertical direction is formed and inserted into a through hole of the crown to be coupled to the lower connection part.

In one embodiment, the abutment assembly may further include the crown in which a second through hole extending in the vertical direction is formed in a central portion of the crown and a second lower groove into which the rotation prevention portion of the lower connection part is inserted and coupled thereto is formed under the second through hole.

In one embodiment, the second lower groove of the crown may include a circular coupling surface to which the rotation prevention portion is coupled, one or more flat surface portions formed perpendicular to a radial direction of the second lower groove may be formed on the coupling surface, and the rotation prevention portion may include one or more rotation prevention surfaces formed to be cut to correspond to the flat surface portions.

In one embodiment, the second lower groove of the crown may include a circular coupling surface to which the rotation prevention portion is coupled, a recessed portion may be formed in the coupling surface, and the rotation prevention portion may include a protruding portion corresponding to the recessed portion.

In one embodiment, a stepped portion may be provided in the second through hole of the crown, and the upper connection part may include an upper support portion caught on and supported by the stepped portion of the crown and a coupling portion extending from a lower portion of the upper support portion and coupled to the first through hole.

In one embodiment, a cross section of the coupling portion may be formed in a circular shape, and the coupling portion may be press-fitted into the first through hole of the lower connection part such that an outer circumferential surface of the coupling portion is in close contact with an inner circumferential surface of the first through hole.

In one embodiment, the abutment assembly may further include the abutment having a central portion in which a second inner groove including a second inner circumferential screw portion is formed and including a lower side portion supporting a lower portion of the lower connection part and an upper side portion protruding upward from the lower side portion and coupled to the first lower groove.

In one embodiment, the first lower groove may include a rotation prevention groove to which the upper side portion is coupled.

In one embodiment, the first lower groove may be formed in a shape corresponding to an outer surface of the upper side portion.

In one embodiment, the rotation prevention groove may be formed as a polygonal groove having a polygonal shape, and a polygonal portion corresponding to the rotation prevention groove may be formed on the upper side portion.

In one embodiment, the abutment assembly may further include a screw supported by an upper surface of the upper connection part and having a lower portion in which an outer circumferential screw portion fastened to a second inner circumferential screw portion of the abutment is formed.

Another aspect of the present invention provides an abutment assembly including an implant implanted in an alveolar bone and including a first inner groove in which a first inner circumferential screw portion is formed, an abutment having a central portion in which a second inner groove including a second inner circumferential screw portion is formed and including a lower side portion inserted into the first inner groove and fastened to the first inner circumferential screw portion and an upper side portion protruding upward from the lower side portion, a crown having a central portion in which a second through hole extending in a vertical direction is formed and including a second lower groove under the second through hole, a lower connection part having a central portion in which a first through hole extending in the vertical direction is formed, an inner side at which a first lower groove to which an upper side portion of the abutment is coupled to prevent relative rotation is formed, and an outer side at which a rotation prevention portion coupled to a second lower groove of the crown to prevent relative rotation is formed, and an upper connection part having a central portion in which a third through hole extending in the vertical direction is formed and inserted into the second through hole of the crown to be coupled to the lower connection part.

### [Advantageous Effects]

According to one aspect of the present invention, a crown can be firmly coupled to an abutment due to a coupling structure between an implant, the abutment, a lower connection part, the crown, an upper connection part, and a screw even without dental cement, and thus there is an advantage of preventing gingivitis due to the dental cement.

Effects of the present disclosure are not limited to the above-described effects and should be understood to include all effects which may be inferred from the detailed description of the present disclosure or configuration of the present disclosure described in the claims.

### [Description of Drawings]

FIG. 1 is a perspective view illustrating an abutment assembly according to one embodiment of the present invention.
FIG. 2 is an exploded view illustrating the abutment assembly according to one embodiment of the present invention.
FIG. 3 is a cross-sectional view illustrating the abutment assembly according to one embodiment of the present invention.
FIGS. 4A and 4B are a perspective view and a cross-sectional view, respectively, illustrating an implant according to one embodiment of the present invention.
FIGS. 5A and 5B are a perspective view and a cross-sectional view, respectively, illustrating an abutment according to one embodiment of the present invention.
FIGS. 6A to 6C are a perspective view, a plan view, and a cross-sectional view, respectively, illustrating a lower connection part according to one embodiment of the present invention.
FIGS. 7A to FIG. 7C are a perspective view, a plan view, and a cross-sectional view, respectively, illustrating a crown according to one embodiment of the present invention.
FIGS. 8A and 8B are a perspective view and a cross-sectional view, respectively, illustrating an upper connection part according to one embodiment of the present invention.
FIGS. 9A to 9C are a perspective view, a plan view, and a cross-sectional view, respectively, illustrating an upper connection part according to another embodiment of the present invention.
FIGS. 10A and 10B are a perspective view and a cross-sectional view, respectively, illustrating a screw according to one embodiment of the present invention.
FIGS. 11 and 12 are views illustrating a process of assembling the abutment assembly according to one embodiment of the present invention.

### [Modes of the Invention]

Hereinafter, an abutment assembly of the present invention will be described in detail.

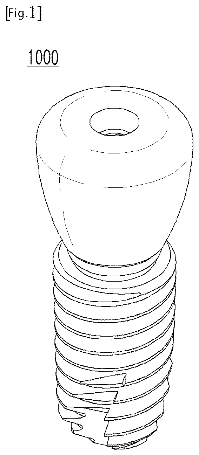

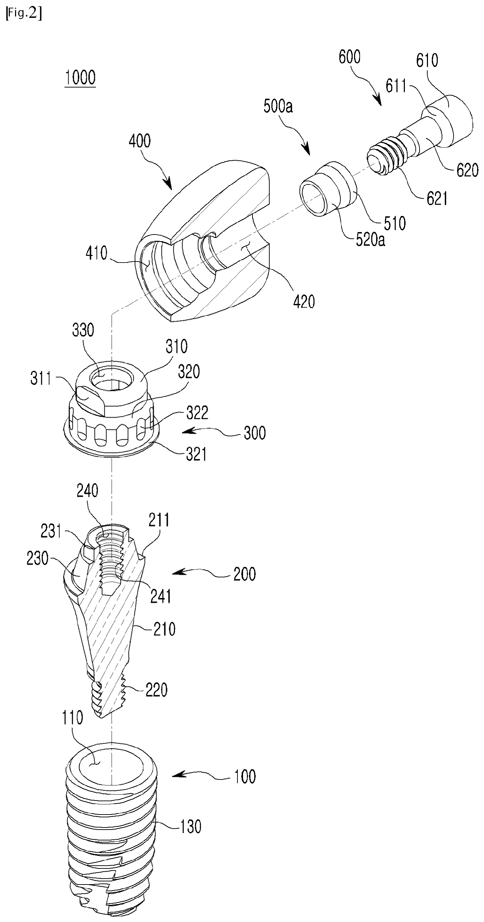

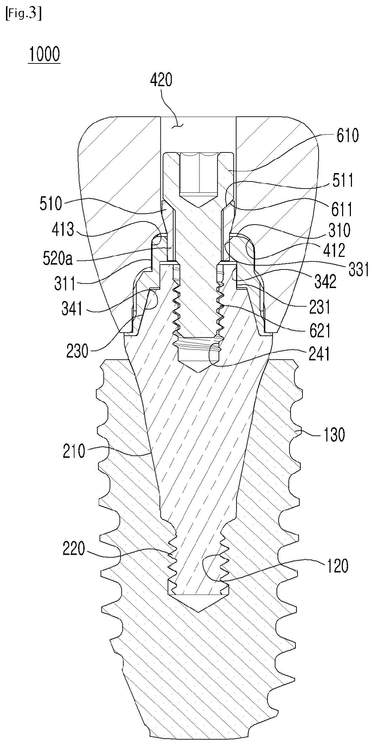

FIG. 1 is a perspective view illustrating an abutment assembly according to one embodiment of the present invention. FIG. 2 is an exploded view illustrating the abutment assembly according to one embodiment of the present invention. FIG. 3 is a cross-sectional view illustrating the abutment assembly according to one embodiment of the present invention.

Referring to FIGS. 1 to 3, an abutment assembly 1000 includes an implant 100, an abutment 200, a lower connection part 300, a crown 400, an upper connection part 500a, and a screw 600.

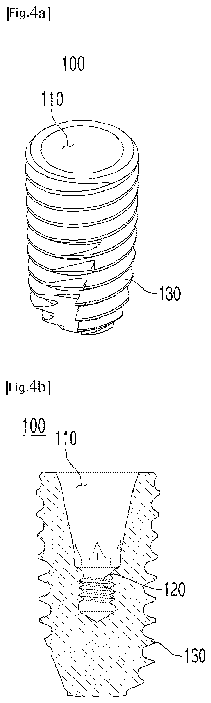

FIGS. 4A and 4B are a perspective view and a cross-sectional view, respectively, illustrating the implant according to one embodiment of the present invention.

Referring to FIGS. 2, 3, 4A, and 4B, the implant 100 is formed to have a tooth root shape of a natural tooth serving as a root. In addition, a first inner groove 110 is formed in a central portion of the implant 100, a first inner circumferential screw portion 120 is installed in a lower portion of the first inner groove 110, and a second outer circumferential screw portion 220 of the abutment 200 is coupled to the first inner circumferential screw portion 120. A first outer circumferential screw portion 130 is formed on an outer circumferential surface of the implant 100, and the implant 100 is inserted into and coupled to an alveolar bone.

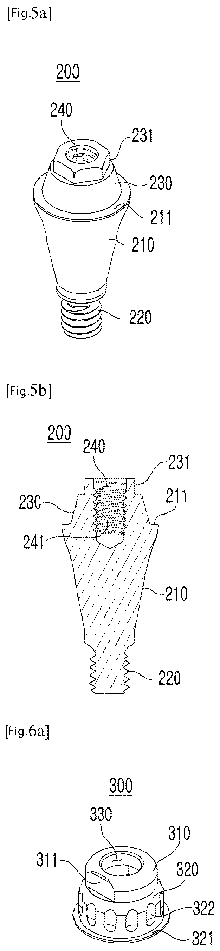

FIGS. 5A and 5B are a perspective view and a cross-sectional view, respectively, illustrating the abutment according to one embodiment of the present invention.

Referring to FIGS. 2, 3, 5A, and 5B, the abutment 200 is coupled to the implant 100 and supports the lower connection part 300 and the crown 400, and a second inner groove 240 is formed in an upper surface of the abutment 200 such that the screw 600 is coupled thereto.

In addition, the abutment 200 includes a lower side portion 210, the second outer circumferential screw portion 220, and an upper side portion 230.

The lower side portion 210 may be inserted into the first inner groove 110 of the implant 100, and an outer circumferential surface of the lower side portion 210 may be formed in a tapered shape of which a diameter decreases downward. In addition, a lower surface 321 of the lower connection part 300 may be supported by an upper surface 211 of the lower side portion 210.

The second outer circumferential screw portion 220 is formed under the lower side portion 210 to extend, a screw thread fastened to the first inner circumferential screw portion 120 of the implant 100 is provided on an outer circumferential surface of the second outer circumferential screw portion 220.

The upper side portion 230 protrudes from an upper portion of the lower side portion 210 toward the outside of the implant 100. A cross section of the upper side portion 230 may have a circular shape, and the upper side portion 230 may be formed in a pyramid shape of which an outer diameter decreases upward.

A polygonal portion 231 having a polygonal shape may protrude from an upper portion of the upper side portion 230.

A second inner circumferential screw portion 241 is installed in the second inner groove 240 of the abutment 200, and the screw 600 is fastened to the second inner circumferential screw portion 241.

FIGS. 6A to 6C are a perspective view, a plan view, and a cross-sectional view, respectively, illustrating the lower connection part according to one embodiment of the present invention.

Referring to FIGS. 2, 3, and 6A to 6C, the lower connection part 300 may be coupled to the upper connection part 500a to connect the abutment 200 and the crown 400 and formed of a metal material such as titanium, but is not limited thereto.

The lower connection part 300 and the upper connection part 500a which are coupled to the crown 400 are fastened to the abutment 200. The lower connection part 300 includes a rotation prevention portion 310 coupled to the crown 400 to prevent relative rotation, a lower support portion 320 supported by the abutment 200, and a first lower groove 340 coupled to the abutment 200 to prevent relative rotation, and a first through hole 330 extending in a vertical direction is formed in a central portion of the lower connection part 300.

The rotation prevention portion 310 is formed at an outer side of the lower connection part 300 and coupled to a second lower groove 410, preferably to a coupling surface 412, of the crown 400. One or more rotation prevention surfaces 311 may be formed on the rotation prevention portion 310. Each of the rotation prevention surfaces 311 may be formed in a shape in which one side of an outer circumferential surface of the rotation prevention portion 310 is cut in the vertical direction. The rotation prevention surface 311 may be aligned with a flat surface portion 413 formed on the coupling surface 412 of the crown 400. That is, when the rotation prevention surface 311 is aligned with and coupled to the flat surface portion 413, rotation of the crown 400 with respect to the lower connection part 300 can be prevented.

In an exemplary embodiment, the lower connection part 300 and the crown 400 may be engaged with each other in a concave-convex manner. For example, a protruding portion (not shown) protruding outward in a radial direction may be formed on an outer surface of the rotation prevention portion 310, and a recessed portion (not shown) corresponding to the protruding portion may be formed in the coupling surface 412.

Meanwhile, the lower support portion 320 may extend downward from a lower portion of the rotation prevention portion 310, and a cross section of the lower support portion 320 may be formed in a circular shape. The lower surface 321 of the lower support portion 320 may be supported by the upper surface 211 of the lower side portion 210 of the abutment 200.

A plurality of recessed grooves 322 may be formed in an outer surface of the lower support portion 320 in a circumferential direction.

In an exemplary embodiment, one recessed groove 322 of the plurality of recessed grooves 322 may be formed in the same direction as the rotation prevention surface 311 of the rotation prevention portion 310. When the rotation prevention portion 310 of the lower connection part 300 enters the second lower groove 410 of the crown 400, since alignment between the rotation prevention surface 311 of the lower connection part 300 and the flat surface portion 413 of the crown 400 is not visually checked, the alignment may be changed when entering. In this case, when one recessed groove 322 of the recessed grooves 322 is formed in the same direction as the rotation prevention surface 311, the alignment between the rotation prevention surface 311 and the flat surface portion 413 of the crown 400 may be visually checked through the recessed groove 322.

The first lower groove 340 is formed in an inner lower portion of the lower connection part 300, and the first through hole 330 communicating with the first lower groove 340 and extending in the vertical direction is formed in a central portion of the first lower groove 340. An inner vertical portion 331 of which a cross section has a circular shape and an inner diameter is constant may be formed downward from an entrance of an upper surface of the first through hole 330 to a predetermined depth.

The first lower groove 340 may include an inclined support surface 341 and a rotation prevention groove 342. A cross section of the inclined support surface 341 may have a circular shape, and the inclined support surface 341 may be formed in a tapered shape of which an inner diameter decreases upward from a lower end of the first lower groove 340. The inclined support surface 341 may be formed at an angle corresponding to an outer surface of the upper side portion 230 of the abutment 200.

The rotation prevention groove 342 may be recessed to extend upward to a predetermined depth from an upper end of the inclined support surface 341 to communicate with the inner vertical portion 331 and formed in a polygonal groove shape corresponding to the polygonal portion 231 of the abutment 200.

That is, when the rotation prevention groove 342 is aligned with and coupled to the polygonal portion 231 of the abutment 200, rotation of the lower connection part 300 with respect to the abutment 200 can be prevented.

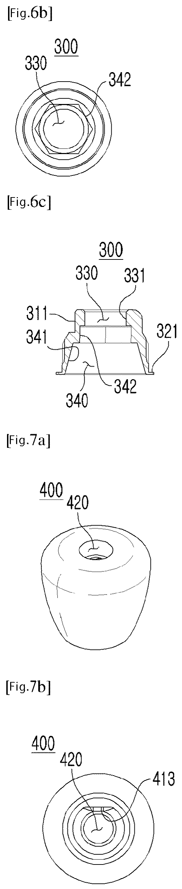

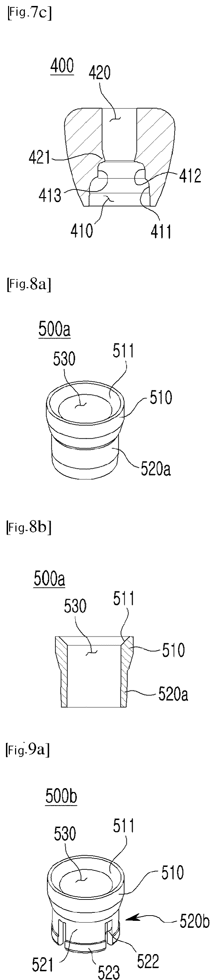

FIGS. 7A to FIG. 7C are a perspective view, a plan view, and a cross-sectional view, respectively, illustrating the crown according to one embodiment of the present invention.

Referring to FIGS 2, 3, and 7A to 7C, the crown 400 may form an exterior of an artificial tooth and may be customized through a computer added design (CAD) or computer added manufacturing (CAM) system based on a library registered on a dental factory. The crown 400 may be formed of a zirconia material but is not limited thereto.

The second lower groove 410 is formed in a lower portion of the crown 400, and a second through hole 420 communicating with the second lower groove 410 and extending in the vertical direction is formed in a central portion of the crown 400.

Specifically, the second lower groove 410 may include an accommodation groove 411, the coupling surface 412, and the flat surface portion 413.

The accommodation groove 411 may be recessed to extend upward to a predetermined depth from a lower end of the second lower groove 410 and formed to have an inner diameter to accommodate the entire outer surface of the lower support portion 320 of the lower connection part 300. In an exemplary embodiment, the accommodation groove 411 may be formed in a shape corresponding to the outer surface of the lower support portion 320.

The coupling surface 412 may be recessed to extend upward to a predetermined depth from an upper end of the accommodation groove 411 and formed in a cylindrical shape. The coupling surface 412 faces the outer surface of the rotation prevention portion 310 of the lower connection part 300.

In addition, one or more flat surface portions 413 formed perpendicular to a radial direction of the second lower groove 410 may be formed on the coupling surface 412. The flat surface portion 413 may be aligned with the rotation prevention surface 311 of the lower connection part 300, and accordingly, rotation of the crown 400 with respect to the lower connection part 300 can be prevented.

In addition, a stepped portion 421 protruding inward in the radial direction may be provided in the second through hole 420. An upper support portion 510 of the upper connection part 500a may be caught on and supported by the stepped portion 421. An upper surface of the stepped portion 421 may be formed as an inclined surface inclined downward.

FIGS. 8A and 8B are a perspective view and a cross-sectional view, respectively, illustrating the upper connection part according to one embodiment of the present invention.

Referring to FIGS. 2, 3, 8A, and 8B, a third through hole 530 extending in the vertical direction is formed in a central portion of the upper connection part 500a, and the upper connection part 500a includes the upper support portion 510 and a coupling portion 520a. The upper connection part 500a may be formed of a metal material such as titanium but is not limited thereto.

The upper support portion 510 is formed in a cylindrical shape to have an outer diameter greater than an inner diameter of the stepped portion 421. A portion of an outer surface of the upper support portion 510 may be formed in a tapered shape corresponding to the inclined surface of the stepped portion 421.

A seating portion 511 of which an inner diameter increase downward may be provided on an upper surface of the upper support portion 510. A head portion 610, more specifically, a tapered portion 611 formed on a lower end of the head portion 610 of the screw 600 may be seated on and supported by the seating portion 511.

The coupling portion 520a may be formed in a cylindrical shape to have a diameter corresponding to the inner vertical portion 331 of the lower connection part 300. In this case, the coupling portion 520a may be coupled to the lower connection part 300 in a forcible press fitting manner, and when the press fitting is completed, an outer surface of the coupling portion 520a and an inner surface of the inner vertical portion 331 of the lower connection part 300 may be in close contact with each other to maintain a firmly coupled state.

Accordingly, the crown 400 may be separably fastened to the abutment 200. That is, the crown 400 and the abutment 200 may be fastened to prevent the crown 400 from being out of position due to gum repulsion even without using cement.

In addition, the lower connection part 300 and the upper connection part 500a reduce impacts applied to the alveolar bone when chewing is repeatedly performed and serve as a periodontal ligament at the same time by reproducing fluidity almost similar to the movement of the natural tooth through the elastic deformation when an external force is applied thereto to absorb and disperse the external force.

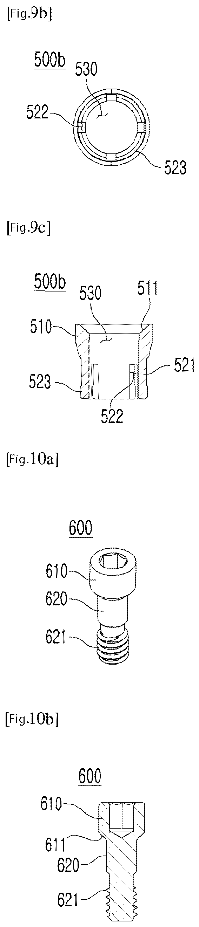

FIGS. 9A to 9C are a perspective view, a plan view, and a cross-sectional view, respectively, illustrating an upper connection part according to another embodiment of the present invention.

The upper connection part 500a is coupled to the lower connection part 300 in a forcible press fitting manner but is not limited thereto.

For example, referring to FIGS. 6 and 9A to 9C, a coupling portion 520b of an upper connection part 500b may include at least two coupling pieces 521 divided by cut grooves 522 formed from an upper support portion 510 to a lower end in a vertical direction and may be elastically deformed in a radial direction.

The adjacent cut grooves 522 may be formed to be spaced apart from each other at the same angles in a circumferential direction of the coupling portion 520b. For example, the lower cut grooves 522 may be formed to be spaced apart from each other at 90° around the third through hole 530, and thus the coupling portion 520b may include a total of four coupling pieces 521. However, the number of the lower cut grooves 522 is not limited thereto and may vary as necessary.

The coupling portion 520b may be fastened to a first through hole 330 of a lower connection part 300 in a snap coupling manner. Specifically, each of the coupling pieces 521 has a diameter corresponding to the first through hole 330. A catching protrusion 523 protruding outward in the radial direction may be formed on an end portion of the coupling piece 521. The catching protrusion 523 may guide snap coupling thereof to a lower end of an inner vertical portion 331, that is, a rotation prevention groove 342.

That is, when the coupling piece 521 is inserted into the first through hole 330, the catching protrusion 523 may be elastically contracted and deformed while in contact with an inner surface of the inner vertical portion 331. Then, when the coupling piece 521 is completely inserted into the first through hole 330, as the catching protrusion 523 passes through the inner vertical portion 331 and is seated in the rotation prevention groove 342, the catching protrusion 523 may be elastically restored.

FIGS. 10A and 10B are a perspective view and a cross-sectional view, respectively, illustrating the screw according to one embodiment of the present invention.

Referring to FIGS. 2, 3, 10A, and 10B, the screw 600 may pass through the second through hole 420 of the crown 400, may be coupled to the second inner circumferential screw portion 241 of the abutment 200, and may be formed of a metal material such as titanium, but is not limited thereto. The screw 600 include the head portion 610 and a body portion 620.

A driver groove may be formed in an upper surface of the head portion 610 such that a dental driver is fitted into the driver groove and rotates the head portion 610. The driver groove includes six grooves formed to be spaced a predetermined distance from each other in a circumferential distance and recessed in an inner wall of the head portion 610 such that the hexagonal dental driver is fitted thereinto. However, the present invention is not limited thereto, and the number of the grooves of the driver groove may vary to correspond to the dental driver formed in a triangular, quadrangular, or pentagonal shape.

The tapered portion 611 may be formed on the lower end of the head portion 610. The tapered portion 611 may be a portion which connects the head portion 610 and the body portion 620 and may be formed such that a diameter gradually decreases toward a lower end portion. When the screw 600 passes through the second through hole 420 of the crown 400 and is fastened to the second inner circumferential screw portion 241 of the abutment 200, the tapered portion 611 is supported by the seating portion 511 of the upper connection part 500a.

In this case, since the screw 600 formed of the metal material is supported by the seating portion 511 of the upper connection part 500a formed of the metal material, a mutual frictional force may be increased to prevent loosening of the screw 600.

The body portion 620 has a cylindrical shape extending from the tapered portion 611 in a longitudinal direction, and a third outer circumferential screw portion 621 which is partially fastened to the second inner circumferential screw portion 241 of the abutment 200 is formed on an outer circumferential surface of the body portion 620.

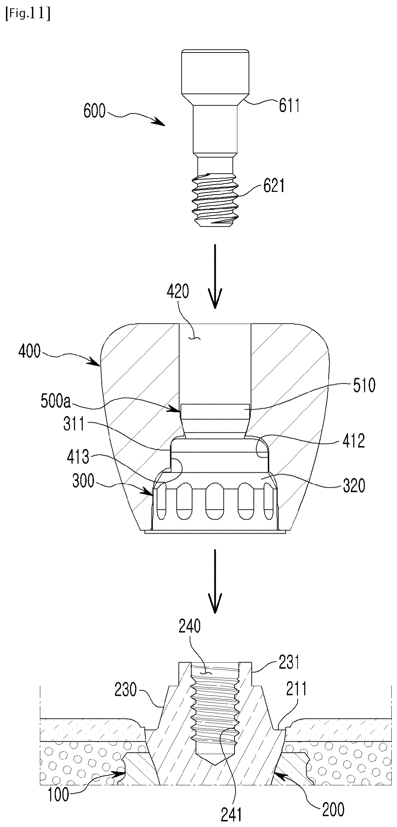

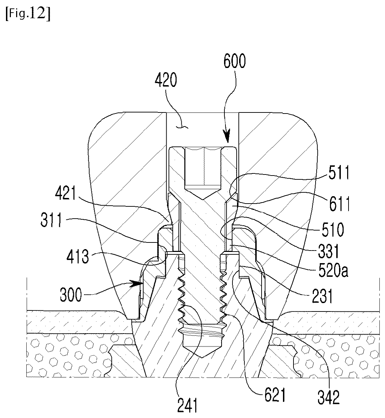

FIGS. 11 and 12 are views illustrating a process of assembling the abutment assembly according to one embodiment of the present invention.

Hereinafter, a process of assembling the abutment assembly 1000 of the present invention will be described in detail with reference to FIGS. 11 and 12.

First, the abutment 200 is fixedly inserted into the implant 100 implanted in the alveolar bone.

In addition, the rotation prevention surface 311 formed on the rotation prevention portion 310 of the lower connection part 300 is aligned with and inserted into the flat surface portion 413 from on the coupling surface 412 of the crown 400, and the upper connection part 500a enters the lower connection part 300 through the second through hole 420 of the crown 400. Accordingly, the lower connection part 300, the crown 400, and the upper connection part 500a are completely fastened.

Next, when the rotation prevention groove 342 is aligned with the polygonal portion 231 of the abutment 200, and the lower connection part 300 is seated on the upper surface 211 of the abutment 200, the crown 400 and the abutment 200 are temporarily completely fastened.

Then, when the third outer circumferential screw portion 621 of the screw 600 passes through the second through hole 420 of the crown 400 and is coupled to the second inner circumferential screw portion 241 of the abutment 200, the tapered portion 611 of the screw 600 is supported by the seating portion 521 of the upper connection part 500a, and thus the lower connection part 300, the upper connection part 500a, and the crown 400 are more firmly coupled.

As described above, according to the abutment assembly 1000 of the present invention, the crown 400 may be firmly coupled to the abutment 200 due to coupling structures between the implant 100, the abutment 200, the lower connection part 300, the crown 400, the upper connection part 500a, and the screw 600 even without the dental cement, and thus occurrence of gingivitis due to the dental cement can be prevented.

The above description is only exemplary, and it will be understood by those skilled in the art that the invention may be performed in other concrete forms without changing the technological scope and essential features. Therefore, the above-described embodiments should be considered as only examples in all aspects and not for purposes of limitation. For example, each component described as a single type may be implemented in a distributed manner, and similarly, components that are described as being distributed may be implemented in a coupled manner.

The scope of the present invention is defined by the appended claims and encompasses all modifications or alterations derived from meanings, the scope, and equivalents of the appended claims.

### [Reference Numerals]

1000 ABUTMENT ASSEMBLY
100 IMPLANT
200 ABUTMENT
300 LOWER CONNECTION PART
400 CROWN
500A, 500B UPPER CONNECTION PART
600 SCREW

## Claims

1. An abutment assembly (1000) comprising:
a lower connection part (300) having a central portion in which a first through hole extending in a vertical direction is formed, an inner side at which a first lower groove coupled to an abutment (200) to prevent relative rotation is formed, and an outer side at which a rotation prevention portion coupled to a crown (400) to prevent relative rotation is formed; and
an upper connection part (500A, 500B) having a central portion in which a third through hole extending in the vertical direction is formed and inserted into a through hole of the crown (400) to be coupled to the lower connection part (300).

2. The abutment assembly (1000) of claim 1, further comprising the crown (400) in which a second through hole extending in the vertical direction is formed in a central portion of the crown (400) and a second lower groove into which the rotation prevention portion of the lower connection part (300) is inserted and coupled thereto is formed under the second through hole.

3. The abutment assembly (1000) of claim 2, wherein:
the second lower groove of the crown (400) includes a circular coupling surface to which the rotation prevention portion is coupled;
one or more flat surface portions formed perpendicular to a radial direction of the second lower groove are formed on the coupling surface; and
the rotation prevention portion includes one or more rotation prevention surfaces formed to be cut to correspond to the flat surface portions.

4. The abutment assembly (1000) of claim 2, wherein:
the second lower groove of the crown (400) includes a circular coupling surface to which the rotation prevention portion is coupled;
a recessed portion is formed in the coupling surface; and
the rotation prevention portion includes a protruding portion corresponding to the recessed portion.

5. The abutment assembly (1000) of claim 2, wherein:
a stepped portion is provided in the second through hole of the crown (400); and
the upper connection part (500A, 500B) includes an upper support portion caught on and supported by the stepped portion of the crown (400) and a coupling portion extending from a lower portion of the upper support portion and coupled to the first through hole.

6. The abutment assembly (1000) of claim 5, wherein:
a cross section of the coupling portion is formed in a circular shape; and
the coupling portion is press-fitted into the first through hole of the lower connection part (300) such that an outer circumferential surface of the coupling portion is in close contact with an inner circumferential surface of the first through hole.

7. The abutment assembly (1000) of claim 1, further comprising the abutment (200) having a central portion in which a second inner groove including a second inner circumferential screw portion is formed and including a lower side portion supporting a lower portion of the lower connection part (300) and an upper side portion protruding upward from the lower side portion and coupled to the first lower groove.

8. The abutment assembly (1000) of claim 7, wherein the first lower groove includes a rotation prevention groove to which the upper side portion is coupled.

9. The abutment assembly (1000) of claim 8, wherein the first lower groove is formed in a shape corresponding to an outer surface of the upper side portion.

10. The abutment assembly (1000) of claim 8, wherein:
the rotation prevention groove is formed as a polygonal groove having a polygonal shape; and
a polygonal portion corresponding to the rotation prevention groove is formed on the upper side portion.

11. The abutment assembly (1000) of claim 8, further comprising a screw (600) supported by an upper surface of the upper connection part (500A, 500B) and having a lower portion in which an outer circumferential screw portion fastened to a second inner circumferential screw portion of the abutment (200) is formed.

12. An abutment assembly (1000) comprising:
an implant (100) implanted in an alveolar bone and including a first inner groove in which a first inner circumferential screw portion is formed;
an abutment (200) having a central portion in which a second inner groove including a second inner circumferential screw portion is formed and including a lower side portion inserted into the first inner groove and fastened to the first inner circumferential screw portion and an upper side portion protruding upward from the lower side portion;
a crown (400) having a central portion in which a second through hole extending in a vertical direction is formed and including a second lower groove under the second through hole;
a lower connection part (300) having a central portion in which a first through hole extending in the vertical direction is formed, an inner side at which a first lower groove to which an upper side portion of the abutment (200) is coupled to prevent relative rotation is formed, and an outer side at which a rotation prevention portion coupled to a second lower groove of the crown (400) to prevent relative rotation is formed; and
an upper connection part (500A, 500B) having a central portion in which a third through hole extending in the vertical direction is formed and inserted into the second through hole of the crown (400) to be coupled to the lower connection part (300).
